# EUROPEAN PATENT SPECIFICATION

(11) **EP 1 446 442 B1**
(45) Date of publication and mention of the grant of the patent: **18.07.2007**
(21) Application number: 02801818.2
(22) Date of filing: 18.10.2002
(51) Int. Cl.: C08H 5/00, C02F 1/52, A23L 2/80, C12H 1/04

(54) **COMPLEXATING SYSTEMS, INTERMEDIATES FOR THEIR PRODUCTION AND METHOD FOR OBTAINING AND USING THE SAME**
KOMPLEXIERUNGSSYSTEME, ZWISCHENSTUFEN FÜR DEREN HERSTELLUNG UND VERFAHREN ZUR HERSTELLUNG UND VERWENDUNG DAVON
SYSTEMES DE COMPLEXATION, INTERMEDIAIRES POUR LEUR PRODUCTION, ET LEURS PROCEDES D'OBTENTION ET D'UTILISATION

(30) Priority: 24.10.2001 EP 01870227
(43) Date of publication of application: 18.08.2004
(73) Proprietor: Omnichem S.A., 1348 Louvain-La Neuve (BE)
(72) Inventor: VAN BRUSSEL, Willy, B-9230 Wetteren (BE); JACOBS, Pierre, Auguste, B-1755 Gooik (BE); SCHELKENS, Geert, B-9230 Wetteren (BE); DE PAUW, Christiaan, Marcel, Hilaire, B-9630 Zwalm (BE); RICQUIER, Patrick, B-8400 Oostende (BE)
(74) Representative: Van Malderen, Joëlle
(86) International application number: PCT/BE2002/000158
(87) International publication number: WO 2003/035723

(56) References cited:
- WO-A-00/37584
- WO-A-96/09885
- WO-A-97/20216
- WO-A-98/00455
- PATENT ABSTRACTS OF JAPAN vol. 1996, no. 04, 30 April 1996 (1996-04-30) & JP 07 313870 A (RENGO CO LTD), 5 December 1995 (1995-12-05) & DATABASE WPI Week 199606 Derwent Publications Ltd., London, GB; AN 1996-054204 "Water-insol. tannin for protein or heavy metal selective adsorption - has water insoluble hydrophilic support comprising fixed tannin" & JP 07 313870 A (RENGO CO LTD), 5 December 1995 (1995-12-05)
- PATENT ABSTRACTS OF JAPAN vol. 017, no. 025 (C-1017), 18 January 1993 (1993-01-18) & JP 04 247005 A (LION CORP), 3 September 1992 (1992-09-03) & DATABASE WPI Week 199242 Derwent Publications Ltd., London, GB; AN 1992-343787 "Water insol. tannin prepn. used for anti-duckweed agent - obtd. by reacting tannin with cpd. contg. functional gp. capable of forming covalent bonding with hydroxy gp." & JP 04 247005 A (LION CORP), 3 September 1992 (1992-09-03)
- DATABASE CHEMABS [Online] Chemical Abstracts Service, Columbus, Ohio, US; "Surface treatment of zinc and zinc alloys" retrieved from STN Database accession no. 101:196685 XP002194618 & JP 59 116381 A (MITSUI MINING AND SMELTING CO.) 5 July 1984 (1984-07-05)

## Description

### Field of the invention

The present invention is related to complexating systems, intermediates for their production as well as to method for obtaining and using said complexating systems.

The present invention exhibits particularly advantageous applications in different fields of industry such as food industry, biotechnology or metallurgy, especially when removal of charged macromolecules or metal ions from solutions is sought.

### Background of the invention

Complexating agents are widely used in industry to remove undesirable target molecules from solutions for purification, stabilisation, and de-pollution purposes. Said complexating agents correspond chemically to chelating molecules able to bind by non-covalent binding to one or more target molecules by non-covalent binding. Criteria for the selection of competitive complexating agents are selectivity, specificity, stability and ease of use.

Examples of such complexating agents are tannins. Tannins are naturally occurring substances derived from phenolic compounds such as gallic acid, which are present for example in plant material such as in gall nuts, tree barks such as oak and hemlock and leaves such as sumac. These plant materials have been used for centuries in their crude form for their ability to tan skins. Tannins are nowadays used in different industrial fields for their complexating properties towards both metals and proteins, for example in the textile industry as mordant and fixative, in galvanoplastics as gelatin precipitant, as clarifying agent in wine manufacture and brewing, in the pharmaceutical industry or in paper industry as sizing agent and mordant for colored papers.

In order to improve the performances of the tannins used in industrial processes, in terms of ease of use, avoiding residues and recycling, it has been proposed to immobilise tannins on solid supports.

A number of attempts has been made in the past to immobilise tannins by covalent binding to obtain a polymeric material. Most attempts described in the literature are variations of the phenol-formaldehyde polymerisation. For example, in US 4,500,554, this polymerisation is described. This method has the disadvantage that it uses the toxic formaldehyde, which is incompatible with food or pharmaceutical applications, and that the resin thus obtained shows a low porosity.

Tannin has been grafted on polymers such as polyethylene by irradiation of the polymer (Kim et al. J. Appl. Polym. Sci., 39, 855-863 (1990)). Other approaches using polymers are found in US 4,435,529, where compositions based on polyethers and polyurethanes were used. However, these polymers lack porosity and are not mechanically stable to industrial handling.

In the patent of Chibata (US 4,090,919), tannin is immobilised on a polysaccharide derivatised by consecutive reactions with epichlorohydrin, a bisamine, and epichlorohydrin. A covalently bound product is obtained. However, the use of the carcinogenic epichlorohydrin and the highly complex synthesis renders the product commercially uninteresting.

Immobilisation on inorganic oxide has been described in a number of patents. In US 4,500,554, tannic acid is reacted with aminopropyltriethoxysilane and immobilised onto silica using chemicals such as sodium periodate and formaldehyde. This complex approach uses toxic reagents, and leads to products which are not always covalently bound to the polymeric backbone.

In WO 97/20216, a method is described using silane modified inorganic oxide supports. In this approach, a covalently bound polyphenol may be obtained. The synthesis of this product should be performed with dry silica, in an aprotic solvent, results in the release of hydrogen during the reaction, and may not lead to covalently bound material.

An improved version of the immobilisation can be found in patent publication WO 98/00455. In this paper, the tannin is cross-linked with the epoxide groups of a diglycidyl ether, and adsorbed onto silica. Again, this product lacks the covalent bonding and is synthesised at over 100°C for a long period which is an important disadvantage due to the instability of tannin at these temperatures.

In other words, the main disadvantages of those known processes of immobilisation are either the use of chemicals that are hazardous, such as formaldehyde, epichlorohydrin or peroxodisulphate, and thus incompatible with food applications, either the fact that non covalently bound compounds are obtained which can lead to leaching into the solutions during the application or the fact that high reaction temperatures can lead to a reduced activity of the tannin molecules. Moreover, most polymeric carriers used beside inorganic oxides lack porosity, a high specific surface area or the mechanical strength of inorganic oxides.

Therefore, there is still a need for an efficient immobilised tannin system, which could be used industrially.

Document WO 00/37584 (Corning Inc.) discloses a method for stabilising monomers, wherein said monomers are placed in contact with an effective amount of at least one radical polymerisation inhibitor or retarder such as catechol or hydroquinone. Preferably, said inhibitor or retarder is immobilised on a solid support, such as silica or a silica-based mineral support, via a coupling agent, for example SiCl4. Said document concerns also radical polymerisation inhibitors or retarders immobilised on a solid support.

Document WO96/09885 (Syracuse University) describes ceramic compositions used for removing metal ions by chelation from solutions such as aqueous waste streams. Said compositions are formed by covalent bonding to terminal hydroxyl groups of a ceramic inorganic carrier or support a substituted silane linking group attached to a chelating agent or ligand which is pyrogallol or a derivative thereof. The attachment of monoaromatic compounds such as described in both documents, leads to a product possessing only a limited chelation activity, whereas commercially interesting complexation of metals and proteins requires a much higher activity.

### Aims of the invention

The present invention aims to provide an immobilised tannin system and a method using said system which do not present the drawbacks of the systems and methods of the state of the art mentioned hereabove.

In particular, the present invention aims to provide a system and a method which allow the complexation of target molecules, preferably charged target molecules of high molecular weight such as polypeptides or proteins, or metal ions, contained in a medium.

Another aim of the present invention is to provide a system and a method which allow such complexation with a high efficiency.

Another aim of the present invention is to provide a system and a method, wherein said system is able to form with the target molecules complexes of sufficient stability for further processing.

The present invention also aims to provide a system and a method which allow the easy removal of target molecules from said medium.

Another aim of the present invention is to provide a system and a method offering the maximum of guarantees in terms of security, for both the manipulator and the future consumer, as there is a need for a complexating system as a technical aid in food processing.

Moreover, the present invention aims to provide a system and a method allowing the possible separate recovery of both the system and the target molecules after extraction from the medium.

### Summary of the invention

The present invention is related to a complexating system comprising a tannin immobilised on a solid support by means of a bifunctional spacer which is covalently bound from one hand to said solid support by a first function and from the other hand to said tannin by a second function, wherein the tannin is a naturally occurring tannin and exhibits at least six hydroxyl groups. In more preferred embodiments, the tannin exhibits more hydroxyl groups, preferably more than 8 and advantageously more than 15 hydroxyl groups.

The term "covalently bound" refers to a bond between two atoms, wherein electrons are shared between said atoms.

Naturally occurring tannins are high molecular weight phenolic compounds occurring in plant material. They have molecular weights of over 300 up to 3000, and possess up to 30 and even more hydroxyl groups. They are divided into two categories: hydrolysable tannins and condensed tannins. They have the presence of a large amount of phenolic hydroxyl groups in common, leading to a high complexating ability.

Preferably, the tannin of the complexating system according to the present invention is selected from the group consisting of hydrolysable tannins and condensed tannins.

It should be noted that the terms "hydrolysable and condensed tannins" refer to compounds as disclosed in the standard work " Chemistry of vegetable tannins" by E. Haslam, Ed. Academic Press, London, 1966.

Examples of such tannins which may advantageously be used in the present invention are tannins obtained from plant extracts and commercialised under the trade names Brewtan^{®}, TANAL, TANEX, FLOCTAN, TEXTAN and BIOGRADE.

According to a first preferred embodiment, said tannin is an hydrolysable tannin comprising a central nucleus such as glucose or quinic acid esterified with a number of compounds selected from the group consisting of gallic acids, ellagic acids, digallic acid, trigallic acid, ellagic acid, cinnamic acid, and derivatives based on these compounds, such as alkylated gallic acid or esterified gallic acid.

Examples of hydrolysable tannins comprising a glucose as central nucleus are the tannin found in Chinese gall nuts or in Aleppo nuts.

One example of hydrolysable tannins comprising quinic acid as central nucleus is Tara tannin.

Other hydrolysable tannins extracted from plants are also convenient for the present invention, such as Bengal Kino tannins, Sumach tannins, Turkish tannins or Acer tannins or tannins of other plants, said tannins differing from each other in the origin of the central part, in the relative abundance of the composing parts of the product mixture, and in their molecular weight distribution.

According to a second embodiment, said tannin is a condensed tannin selected from the group consisting of flavanoids, flavanols and stilbene derivatives or a mixture thereof.

Condensed tannins may be extracted from heartwood or bark of trees, such as Eucalyptus or Acacia tannins, Quebracho tannins or from other plant sources, such as Persimmon or Kaki tannins, often used for the clarification of sake.

Moreover, advantageously, the solid support in the complexating system of the present invention is selected from the group of inorganic oxides.

Preferably, said solid support is a silica, a silica prepared in the reaction mixture from its monomer or a silicone polymer.

However, other inorganic oxides such as alumina, titanium oxides, zirconium oxides, silica aluminates, aluminosilicates, clays, acid-treated clays, or alkaline earth silicates, may also be used as solid support.

The bifunctional spacer has the following general formula II: 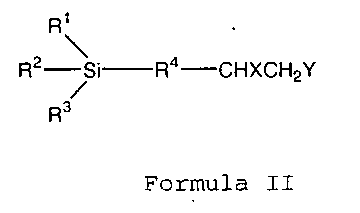 wherein :
- R¹, R² are identical or different and represent an alkyl group with 1-8 carbon atoms, preferably methyl, ethyl or isopropyl, an aryl group, an alkoxy group with 1-8 carbon atoms, preferably methoxy, ethoxy or isopropoxy, or an aryloxy group or an halogen;
- R³ is a hydrogen, an alkyl group with 1-8 carbon atoms, preferably methyl, ethyl or isopropyl, an aryl group, an alkoxy group with 1-8 carbon atoms alignment, preferably methoxy, ethoxy or isopropoxy, an aryloxy group or an halogen;
- R⁴ is an alkyl chain or an alkylcycloalkyl chain containing 1-10 carbon atoms, or an ether chain containing 2-9 carbon atoms around the oxygen;
- and CHXCH₂Y is any group that can react with one of the hydroxyl groups of the tannin , preferably a vinyl group with X, Y = carbon-carbon double bond, an epoxide with X, Y = O, or X and/or Y being leaving groups such as halogenides, sulfonyl esters such as mesylates or tosylates, or isocyanates.

Preferably, the R¹R²R³-Si group of the bifunctional spacer in the formula II is a trimethoxysilyl, a triethoxysilyl group, a dimethyl-silylhydride or a dimethylsilylchloride.

Advantageously, the bifunctional spacer is glycidoxy-propyltrimethoxysilane or glycidoxypropyltriethoxysilane, such as those available from Sivento under the trade names Dynasylan GLYMO^{®} and Dynasylan GLYEO^{®}.

The present invention is also related to an intermediate product useful for the preparation of the complexating system and having the following formula IV:

SP* - Tan Formula IV

wherein SP* and Tan are the bifunctional spacer and the tannin respectively, the bifunctional spacer SP* being covalently bound by its second function to the tannin Tan, while its first function is free.

Another object of the present invention concerns an intermediate product useful for the preparation of the complexating system and having the following formula V:

BB-SP* Formula V

wherein SP* and BB are the bifunctional spacer and the solid support respectively, the bifunctional spacer being covalently bound by its first function to the solid support BB, while its second function is free. Most of these compounds are commercially available.

The present invention is also related to a method for obtaining the complexating system of the invention, said method comprising the steps of forming the intermediate products mentioned hereabove and then either immobilising the intermediate product SP* - Tan on the solid support or reacting the intermediate product BB- SP* with the tannin.

Another object of the present invention concerns a method for removing charged target molecules contained in a medium, preferably an aqueous medium, said method comprising the following steps:
- providing the complexating system of the invention and the medium comprising the target molecules;
- mixing said complexating system and said medium so as to immobilise by complexation said target molecules on the complexating system and obtaining thereby a final product;
- removing said final product from the medium by filtration;
- possibly recovering the complexating system and/or said target molecules for recycling purposes by dissociation of the complex formed.

It is meant by "aqueous medium" a solution comprising water (acidic, neutral, or basic) or other solvents, especially solvents compatible with food applications, such as methanol, ethanol, acetone or the like or mixtures of these solvents.

Preferably, the target molecules to be removed from said medium are metals.

In a particularly advantageous manner, the target molecules are preferably biopolymers.

The present invention is also related to the use of the complexating system or the intermediate product or the method according to the invention, for applications in food industry, in biotechnology, in pharmaceutical industry, in metallurgy, in electronic industry, in textile industry, in waste water treatment or in paper industry.

Preferably, the invention concerns the use of the products or methods of the invention for the clarification and stabilisation of beverages, the treatment of textiles, or the separation and/or purification of proteins.

Example of the use of the complexating systems according to the invention is the treatment of textile fibers in order to avoid discoloration or staining.

Another object of the invention concerns the use of the complexating system of the invention as a radical scavenger, an antibacterial or an antioxidant.

### Detailed description of the invention

### Choice of the tannins:

Combinations of tannins with different properties may be used for obtaining the complexating systems in order to improve the performance of the final products i.e. of the complexating systems.

Moreover, the naturally occurring tannins described above may be chemically modified with simple molecules such as acids or alcohols in order to enhance or change the properties of the final product, depending on the application.

For example, esters of tannin with cinnamic acid and similar aromatic acids find application as UV-protectors, antioxidants or radical scavengers. The immobilisation of these tannin esters will lead to a new class of UV-absorbers with all the advantages insoluble product offers.

### Choice of the spacer:

The spacer is chosen so as to create a distance between the active tannins and the carrier, said distance being sufficient for not negatively altering the properties of the tannin.

The spacer, if containing a stereocenter, may be used as a racemate or in its enantiomeric form.

### Choice of the solid support:

The use of inorganic oxides as solid support offers at least two advantages. The first advantage is their mechanical stability, useful when the product is recycled or intensively manipulated. The second advantage is their relatively high specific surface, which will lead to highly active porous products.

It has been specified hereabove that the inorganic oxide is preferably silica. Said silica may be prepared as a hydrogel, a xerogel or another precipitated or crystallised form of silica or regular silica such as MCM-41 or MCM-48 or the like. Other forms may also be envisaged.

The inorganic oxide should have a minimum particle size, as extremely small particles may lead to slow filtrations. The particles may have an average particle size of 1-1000 µm, depending on the requirements for the specific application or may be clusters of smaller particles with the cluster size within the same range. In case immobilised tannin is used as a stationary phase for high pressure liquid chromatography, particle size preferably is 4- 20 µm. On the other hand, the use of larger particles may be necessary when a quick filtration is a requisite, such as in the removal of metals and proteins by complexation and filtration.

The specific area of silica preferably varies between 100 and 1500 m²/g. The physical characteristics are measured with the state of the art techniques. The particle size distribution is measured with laser diffraction techniques, the specific area is measured with N₂-BET, the pore size distribution is measured with Hg-porosimetry, SEM microscopy is used to view the external form and the homogeneity of the material.

The chemical behaviour of silica largely depends on the amount of free silanols in the material. Preferably, a silica with a large number of silanol groups is used. This is checked by IR and solid state NMR. The water content of the silica is controlled.

A pre-treatment of silica may be useful. The particle size or particle size distribution may be adjusted by sieving or milling. The amount of silanol groups may be increased by an acidic or basic aqueous treatment of the silica, or decreased by a thermal treatment to obtain the desired amount of silanol groups. A dehydration step without affecting the silanol groups may also be necessary for good clean reactions.

Other inorganic oxides, such as alumina, titanium oxides, zirconium oxides, silica aluminates, aluminosilicates, clays, acid-treated clays, alkaline earth silicates, may also be used as carrier material.

The inorganic oxide may also be functionalised, containing a reactive group for the coupling with tannin. More specifically, the functionalised inorganic oxide is silica that may be silica functionalised for use as a scavenger reagent in combinatorial synthesis, with an alkyl group ending in an epoxide, an isocyanate, a halogenide, an alkylsulphonate, an acid chloride, a sulfonyl chloride or a silylhydride group or a vinyl group. The reactive group may be separated from the silica by an alkyl or ether chain composed of 1 to 8 carbons. In this case, the functionalised silica must be considered to be BB-SP** in formula 1, which is reacted with tannin. The inorganic oxide may also be used as an extrudate to facilitate the treatment or the filtration characteristics.

The spacer molecule may also be reacted with the monomer of the inorganic oxide. More specific, alkoxysilanes, alkoxytitanates, aluminium alkoxides, silicium chlorides, aluminium chlorides and titanium chlorides or mixtures of these monomers, used for the synthesis of the inorganic oxides defined above may be applied. More specific, tetraethoxysilane is most commonly used for the synthesis of silica. Cyclic siloxanes, titanates or aluminates such as octamethyltetrasiloxane may also be used as a monomer. Oligomers of the inorganic oxides may also be used , e.g. silica colloid suspensions or sols or gels.

The spacer molecule may also react with silicium-containing polymers, or may also be part of commercially available polymers. The polymers may be silicone polymers containing reactive silicium groups that can react with the spacer molecules described above or with SP*-Tan.

### Method for obtaining the complexating system:

As already mentioned hereabove, the preparation may either start with the coupling of the solid support, preferably silica, with a spacer molecule, or with the coupling of the tannin with a spacer molecule, or may be a one pot system.

The amount of tannin used must be at least 1 weight/weight percent, preferably 3 to 50 weight percent with respect to the final material, and in case no polymeric material is used, up to 90 w/w % tannin.

The amount of the spacer molecule used may vary between approximately 0.1 and 6.0 mole equivalents calculated from the average molecular weight of the tannin. For food applications, the immobilised tannin will be prepared in aqueous medium.

A summary of the synthetic approach is given in the scheme below. 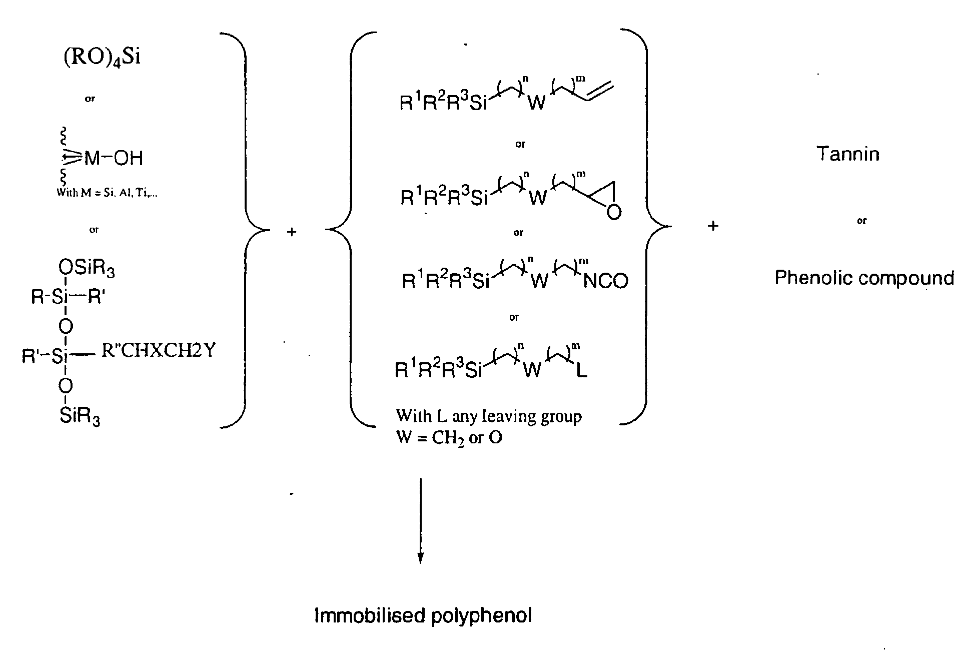 where n + m = 0 to 9 carbon atoms, either part of an ether, an alkyl or an alkylcycloalkyl group
where W = O or CH₂

Synthesis of immobilised tannin using a spacer molecule ending with a leaving group, such as a halogenide, an epoxide, a sulfonic ester, or a hydride, is described hereafter.

### First synthetic approach:

A first synthetic way comprises the production of an intermediate by the reaction of tannin with spacer. This reaction is preferably executed in aqueous medium, in alcohols, ketones or mixtures thereof, at a pH varying from 7 to 12, preferably 8-9.5, and at a temperature of 0-100°C, preferably 20-60°C. An inorganic or organic base is used to set the pH of the mixture, preferably a metal hydroxide such as NaOH, NaHCO₃, or Na₂CO₃, ammonia, or triethylamine and the like. The reaction is controlled via HPLC-analysis, and may take from 15 minutes to 24 hours depending on temperature and pH. The solution of the tannin-spacer obtained by the process, may be used as such or purified. It may also be spray dried or freeze dried to a solid for further use.

. Purification of SP*-Tan thus produced may be achieved by membrane separation of low molecular weight compounds, by distillation of volatiles, by extraction or precipitation of the material, by slurrying in organic solvent.

The SP*-Tan may then be coupled with an inorganic oxide by mixing e.g. silica with tannin-spacer in water, aqueous medium, alcohols or ketones, or mixtures thereof. The mixture is subsequently acidified to pH 1-7, preferably to pH 2-5, and reacted at 0-100°C, preferably 20-40°C. The mixture is stirred for 1 to 24 hours until completion of the reaction. Acids used include mineral acids such as hydrochloric acid or organic acids such as formic or acetic acid.

The SP*-Tan may also be combined with monomer of an inorganic oxide, such as tetraethyl orthosilicate, aluminium triethoxide or titanium (IV) isopropoxide. In this case, SP*-Tan and monomer are mixed in a solvent such as water, aqueous mixtures, a ketone or an alcohol, or mixtures thereof. The polymerisation is effected either by acidic or by basic catalysis. Acid catalysts can be any protic acid, such as HC1. Basic catalysis can be effected by ammonia or by ammonia buffered with ammonium salts or by organic amines such as triethylamine. This technique, called sol gel polymerisation, affords to influence the structure of the material obtained by changing the reaction conditions. In this way, modifications in physical and chemical properties of the material can be achieved. Additionally, surfactants may be added to influence the physical structure of the final material.

The SP*-Tan in water may also serve as the monomer. In this case, the mixture is acidified to pH 1-7, at 0-100°C, preferably 20-40°C, and stirred for 1-24 hours until completion of the polymerisation. The R¹R²R³-silicium group reacts into a polymeric backbone on which the tannin is attached.

### Second synthetic approach:

In another approach, the spacer is reacted first with the inorganic oxide.

The condensation can be performed in any solvent, but preferably uses a solvent that is suitable for food grade applications such as water, alcohol, ketones or mixtures thereof.

The reaction of the inorganic oxide with the spacer in aqueous medium or in polar solvents such as alcohols, ketones or mixtures thereof is carried out at pH 1-7, at 0-100°C, preferably 20-60 °C for 1 to 24 hours. The spacer may be added to an acidic or basic suspension of silica, or acid or base is added to a suspension containing silica and spacer.

After the formation of inorganic oxide-spacer reaction product, the material is collected either by filtration and washings or by spray drying. It may be used as such in the following step, or it may be dried in a vacuum oven at 20-100°C.

Said inorganic oxide-spacer reaction product is then suspended in aqueous medium or in a polar solvent such as an alcohol or a ketone or a combination of the above. Tannin is subsequently added, and the pH is adjusted to 7-12, preferably to 8-10, and the reaction mixture is heated to 20-100°C, preferably to 20-60°C. The reaction mixture is stirred until a satisfying amount of tannin is immobilised.

The pH can be adjusted to 7-12 using a range of bases, such as ammonia, metal hydroxide, carbonates, organic bases either dissolved in water, or in a pure form. Preferred is sodium hydroxide.

In another type of approach the spacer molecule is polymerised with the inorganic oxide monomer, and then tannin is coupled onto the formed polymer. In this way, a variant of a functionalised silica gel may be obtained.

The spacer molecules do not necessarily end with a leaving group, but may end with an unsaturated group, such as an isocyanate or an alkene or conjugated alkene, that can serve as acceptor for a phenolate anion.

In case isocyanates are used, the reaction mixture has to be low in water content, and should be driven in aprotic solvents and without excess of base. All sequences of reacting tannin, spacer and polymeric backbone (carrier) that are described above are applicable to spacers containing any group as defined above.

The addition of phenolates to unsaturated double bonds may be effected both by acidic and basic catalysis. Acid catalysis may be effected using Lewis acids, mineral acids and sulfonic acids. Basic catalysis may only lead to reaction when activated alkenes are used, e.g. alkenes conjugated with carbonyl derivatives.

In general, the reaction may be performed under inert nitrogen atmosphere. Prior to isolation, the structure of the immobilised tannin may be modified by adding an inorganic or organic acid or base, to a pH suitable for the specific application. The product is then collected by spray drying or by filtration or centrifugation and may be washed.

### Third synthetic approach

An alternative synthetic pathway is to react carrier with spacer or spacer with tannin in the spray drier. This technique is called reactive spray drying. The reaction can also take place in a rotavapor or in a rotating dryer.

During spray drying, the water used to mix the reactives evaporates, and the substances react with each other. The inlet temperature of the spray dryer may vary from just above 100°C up to 250°C, with an outlet temperature of 60-200°C.

### Isolation of the complexating system:

Filtration of the final material should be relatively fast, as this parameter is essential for the future use of the product. Indeed, the materials prepared show a good filtration speed.

Purification of the product may be achieved by reslurrying in aqueous solution or in polar solvents such as alcohols, ketones or mixtures thereof, or by distillation of volatiles. This purification may remove residual spacer, tannin, salts or solvents.

The product is finally dried in a vacuum oven at 20-100°C if required.

### Analysis of the complexating system obtained:

The analysis of the product is performed by a variation of techniques. The characterisation was performed by FT-IR, ¹H-MAS-NMR, ¹³C and ²⁹Si MAS-NMR, TGA-DTA, SEM, BET porosity measurements and particle size distribution measurements. Typical results are described in the examples.

Further analyses include inorganic ash, KF, residual solvent, residual tannin measurement.

The immobilised tannin prepared as described may be used as such, as a gel, as a spray-dried product or in formulations or as composite materials with other compounds depending on the properties required.

### Applications:

The complexating system of the invention may be used for the known applications of tannins. Most applications are based on the capacity of tannin to complexate proteins or metals.

The first group of applications for immobilised tannin is the uptake and removal of proteins. In the case of beer stabilisation by immobilised tannins, proteins and yeast residues are removed to obtain a clarified beer without using large quantities of filter aid. This is an advantage over the classical beer clarifications with tannin itself. Moreover, immobilised tannins may be applied in a column or in another continuous mode or may be recovered. A major advantage is the absence of tannin residues in the beverage.

The activity in beer is checked via a Chapon test. In this test, beer is treated with immobilised tannin, filtered, alcohol is added, and the turbidity is measured after cooling at -5°C for 1 hour.

Immobilised tannin may also be used for treatment of other beverages, such as wine, sake, port, fruit juices, lemonades.

Immobilised tannin may also be used in the purification of enzymes or proteins, as there is selectivity depending on the composition and the molecular weight of the protein. The complex formation with proteins may lead to applications in the chromatographic field. Proteins may also be immobilised on immobilised tannin.

The protein uptake is checked by treating a standard protein solution with immobilised tannin, followed by measurement of the residual amount of protein in the supernatant.

Immobilised tannin can also be applied to complexate and remove metal ions from any solution, such as beverages, waste water, water containing precious metals, water containing heavy metals, chemical reaction mixtures, radioactive waste water, organic solvents or organic mixtures containing metals.

To demonstrate the applicability of the material, a test was developed in which standard solutions of Fe(III) are treated with immobilised tannin. As in the protein test, the material shows economically interesting adsorption characteristics.

The insoluble products and/or the particulate spacer-tannin may also be applied to burns, to improve crust formation and to avoid infections. These antibiotic properties of tannin may also be used to avoid unwanted bacterial growth onto solid material exposed to air.

Application of SP*-Tan as such onto a target material is also possible. In this approach, a solution of SP*-Tan is contacted with a support that has to be treated with tannin. The mixture is then acidified, and the SP*-Tan polymerises around the material to form a polymeric coating. This material may be textile or textile fibres, which benefit from a tannin treatment to enhance the colour fastness, wash fastness or anti-staining properties of the textile. The system has the advantage over the classical tannin treatments that there is no leaching of the tannin when the textile is washed, thus the original activity remains fully present, also after repeated washing. Metallic surfaces may also be treated this way to avoid oxidation. A pre-treatment such as etching may be required to activate the surface.

SP*-Tan may also be complexated with dyestuffs. The resulting complex composed of SP*-Tan and the dye may then be used as an ink component for application onto textile, paper or any material to be dyed or printed. After applying the complex onto the material, polymerisation of the adsorbed SP*-Tan-dye complex may be effected by acidification or by heating the material. In this way, the dye is immobilised both by complexation and by inclusion into the polymer matrix, leading to improved wash fastness and water fastness.

SP*-Tan is a very strong antioxidant and an effective radical scavenger. Silica and titanium oxide are used as fillers in a variety of products such as paints, textiles and polymers. The antioxidant and radical scavenging properties of tannin may be applied by immobilising SP*-Tan onto these fillers, such as silica, titanium oxide, zirconium oxide or other inorganic oxides. These immobilised tannins may be used in paints to avoid colour shifting, and thus to increase their stability; in textiles as protection against ageing or against chlorine contact in swimming pools.

### Description of preferred embodiments of the invention

### Example 1 : Preparation of SP*-Tan

A reactor is charged with 107 g Brewtan^{®} and 500 ml water. The solution is treated with NaOH 30% to a pH of 9.50. A total of 78.5 g of base solution is added. The solution is then heated to 60°C. At 60°C, 107 g glycidoxypropyltrimethoxysilane is added over a period of 25 minutes. The mixture is stirred at 60°C for 2 hours and slowly cooled to ambient temperature. The solution is spray dried yielding a nice, brown powder.

### Example 2: Preparation of Silica-SP**

A reactor is charged with 50.00 g. of silica Sipernat^{®} 50 and with 350 mL water. The pH of the resulting suspension is increased to 9.15 by the addition of 10 mL NaHCO₃ saturated and 29 mL Na₂CO₃ saturated. The suspension is warmed to 26°C and 30.00 mL glycidoxypropyltrimethoxysilane is added. The pH is further increased by the addition of 8,0 mL saturated Na₂CO₃ solution. The suspension is reacted for 3 hours at 26°C, filtered, washed with 250 mL of water and 250 mL of MeOH and dried in a vacuum dryer at 60°C over night.

### Example 3: Preparation of Silica-SP** on a rotavapor

In a rotavapor flask, 100 g. of silica Sipernat^{®} 50 is combined with 40 mL saturated Na₂CO₃ solution and 160 mL water. The resulting powder is mixed in a flask, and 7.0 mL Dynasylan Glymo is added while the powder is mixed on a rotavapor. The reaction mixture is additionally rotated for 2 hours at room temperature. After this period, vacuum is applied and the temperature is raised to 60°C to dry the product.

### Example 4: Immobilisation of tannin

14 g Brewtan^{®} is dissolved in 250 ml demineralised water, and treated with NaOH 1 M to a pH of 9.5. Subsequently, 40 g of Daraclar^{®} 7500 based silica-spacer is then added, and the suspension is heated to 60°C for 3 hours. After cooling, the product is collected on a pressure filter and washed with 10 times 100 ml demi water and dried. This yields 39.7 g of slightly brown product. Brewtan is a Chinese gallotannin with between 12 and 30 hydroxyl groups.

### Example 5: Immobilisation via Reactive Spray drying

The process makes use of silica-spacer as prepared in example 2. In a conical flask, 8.00 g. tannin (Brewtan^{®}) is dissolved in 280 mL water. The pH of the solution is increased to 7.5 with NaOH 29 %, and the silica-spacer is added. This suspension is spray-dried in a Büchi Mini Spray Dryer B-191, with an inlet temperature of 215°C and with an outlet temperature of around 140°C.

### Example 6 :

Idem as in Example 4, but the reaction between Brewtan^{®} and SP*-silica was carried out at 30°C for 24 hours.

### Example 7

Idem as in example 5, but using Sipernat 500LS derived BB-SP**.

### Example 8:

A reactor is charged with 30 g Brewtan^{®} and 540 ml water. The solution is treated with NaOH 30% until a pH of 9.50. A total of 20.5 g of base solution is added. The solution is then heated to 60°C. At 60°C, 30 g glycidoxypropyltrimethoxysilane is added over a period of 15 minutes. The mixture is stirred at 60°C for 2 hours and slowly cooled to ambient temperature. 90 g of silica gel Daraclar 7500 is then added to the solution, and a solution of 10 % acetic acid is added to pH 5.0 and the reaction mixture is shortly heated to 60°C. The reaction mixture is then stirred at ambient temperature over night, and filtered and washed with 500 ml water. After drying in a vacuum oven at 60°C for one night, 121.1 g product is obtained.

### Example 9 : TEOS + SP*-Tan polymerisation

SP*-tannin as prepared in Example 1 (Scale: 4.00 g Brewtan^{®} and 4.02 g Dynasylan Glymo (Glycidoxylpropyl trimethoxysilane) reacted in basic water) is added onto 37.4 g Tetraethylorthosilicate (TEOS) under nitrogen flow. This mixture is then further diluted with water (13 ml), and acetic acid 100 % is added to pH 3.79. The acidic mixture is then stirred at room temperature for 1 hour and the solid product is isolated by centrifugation and washed with water. After lyophilisation, 3.91 g of dry matter is obtained.

### Example 10: Polymerisation of SP*-Tan

50 ml water acidified with 1 ml acetic acid 100 % is stirred at ambient temperature. 50 g of a 20 % solution of spacer-tannin prepared as in example 1, dissolved in water, is slowly added to the water over a period of 40 minutes. The pH is controlled between pH 2.0 and 4.0 by the simultaneous addition of 3 extra ml of acetic acid. The obtained suspension is then stirred at ambient temperature for 16 hours, filtered and washed with 2 x 50 ml water. The product is oven-dried at 60°C in vacuum to obtain 7,22 g of product.

### Example 11 : One pot system

30 g of SiO₂ for flash chromatography (Merck 40-63 µm, 60 Å) and 10.00 g Brewtan^{®} was suspended in 120 ml deionized water and inertised. The pH was increased to 9.0, and the suspension was heated to 40°C. 5 ml of Dynasylan Glymo^{®} was subsequently added onto the mixture over 30 minutes, and the reaction was stirred for 5 hours. Afterwards, the pH was adjusted to 5 with a 10 % AcOH solution. The reaction was stirred at 20°C over night. The product was collected by filtration, washed with water and oven dried to afford 42 g of material.

### Example 12: Condensed tannin

A solution of 20.0 g Quebracho tannin was treated with NaOH 30% to a pH of 9.2. and 20.00 g glycidoxypropyltrimethoxysilane was added to this solution at 43°C over a period of 15 minutes. The solution was then stirred for 4 hours, and subsequently added onto a suspension of silica Daraclar 7500 in 240 ml water and 20 ml acetic acid 100 %. The suspension is then stirred over night, filtered and washed with 500 ml of water. After drying to constant weight, 10.65 g immobilised, condensed tannin is obtained. Quebracho tannin has > 4 hydroxyl groups, and a number of constituents possess > 10 hydroxyl groups).

### Example 13: Protein activity test

Schematically, the albumine test can be drawn as:

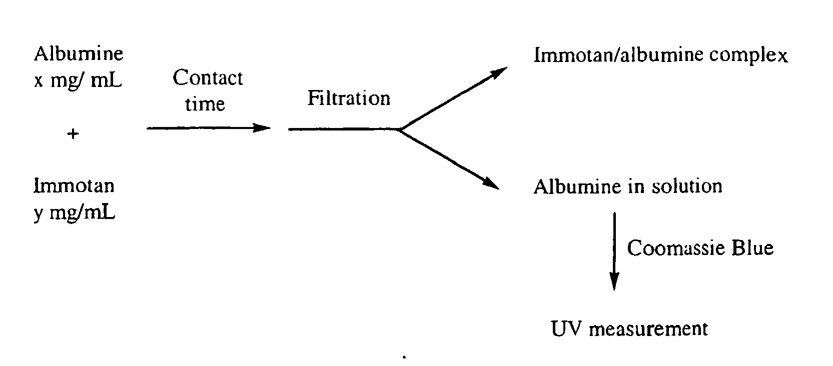

The immobilised tannin is weighed to obtain an estimated 10 mg tannin equivalent based on Thermogravimetric analysis. This polymer is swollen in buffer solution at pH 3.5 for 1 hour. 10 ml of 0.2 wt.% Bovine Serum Albumine (BSA) is then added, and the suspension is stirred for 1 hour at room temperature. The suspension is then centrifugated, and the supernatant is then quantified after combination with Coomassie blue. Some results are described in the Table I below.

**Table I**

| Sample | Synthesis as in example | Contact time | Adsorption capacity mg/g product |
|---|---|---|---|
| IMTA 1/76 | 4 | 0.5 | 90 |
| IMTA 1/88 | 5 | 0.5 | 224 |
| TAN 41 | 9 | 0.5 | 52 |
| TAN 351 | 10 | 0.5 | 54 |
| IMTA 2/14 | 12 | 0.5 | 63 |
| TAN 52 | 7 | 0.5 | 117 |
| TAN 62 | 8 | 0.5 | 117 |
| TAN 62 | 8 | 16 | 213 |
| Chibata (4) | - | 0.15 | 50 |
| IMTA 2/15 | 8 | 0.5 | 201 |

(1) Adsorption capacity = mg BSA adsorbed after 30 minutes contact time per 1 gram of polyphenol present present on the carrier.
(2) It can be concluded that the tannin immobilised complexates its weight of enzyme after a short period of stirring, and the double of its weight at saturation. This proves both that the tannin is still active and that a massive activity is retained.
(3) Both hydrolysable tannins and condensed tannins lead to highly active product.
(4) According to Chibata et al., in Enzyme Microb. Technol., 8, 130-137 (1986), their polymer as described in the prior art, takes much less protein per immobilised tannin weight than the present ones.
(5) Spray dried material (1/88) leads to very high activities.

### Example 14: Chapon test on Beer stabilisation

This test, also known as cold alcohol test, is based on the precipitation of proteins with EtOH. In this test, beer is treated with tannin or immobilised tannin and filtered. 100 g filtrate is then mixed with 8.0 ml ethanol (96% v/v) and cooled for 60 min at -5°C. Measurement of the turbidity after 60 minutes affords a figure directly related to the protein content of the treated beer. A blank without any treatment and the classical in solutio treatment with 2 g/hL Brewtan were carried out as reference points.

| Sample | Chapon test: turbidity | Albumine uptake in mg/g |
|---|---|---|
| Brewtan 2 g/hl | 21,4 | - |
| IMTA 1/88/K3 | 22,8 | 157 |
| IMTA 1/81/K2 | 24,3 | 179 |
| IMTA 1/88/K2 | 24,5 | 224 |
| IMTA 1/76 | 33,5 | 90 |
| Blank | 38,3 | - |

It can be seen from the table that the immobilised tannins indeed show a very good beer stabilisation, comparable to the effect of tannin itself. This proves that the activity of the tannin remains intact after immobilisation.

To assess the effect of Immotan on beer, 50 g/hL Immotan is compared with 2 g/hL Brewtan.

### Example 15 : Fe-adsorption test

Immotan is weighed to obtain approximately 10 mg tannin equivalent and combined with 5 ml of buffer and a stirbar. The suspension is stirred for 1 hour. The suspension is then combined with 5 ml 50 ppm Fe (III) solution, stirred for exactly 30 minutes, and filtered over a 0.45 µm filter.

The resulting, clear solution is diluted with Milli Q water. 5 ml of this solution is then combined with 3 drops of Merck Spectroquant Fe-test. Measurement after at least 15 minutes at 565 nm with the UV spectrophotometer in comparison to a blank composed by Milli Q water and 3 drops of reagent.

**Table II**

| Sample | Synthesis as in example | mg Sample | Adsorption capacity (1) |
|---|---|---|---|
| IMTA 1/4 | 4 | 100.2 | 35.4 |
| IMTA 1/76 | 4 | 32.6 | 12.3 |
| IMTA 1/88 | 5 | | |
| TAN 62 | 6 | 75.7 | 45.9 |
| TAN 41 | 8 | 92.6 | 40.2 |
| TAN 35I | 9 | 31.2 | 13.2 |
| IMTA 2/14 | 11 | 71.1 | 25.6 |
| TAN 52 | 6 | 85.1 | 44.5 |

(1) The adsorption capacity is the number of mg Fe adsorbed by 1 gram of tannin immobilised.
(2) The most active samples take 2 moles Fe (III) per mole tannin immobilised. It can be seen that the activity of tannin is nicely retained, and that all the above mentioned synthetic procedures render active product for the complexation of metals.

In conclusion, the complexating systems according to the present invention offer several advantages over the ones disclosed in the prior art.

A first main advantage is the fact that the high amount of phenolic hydroxyl groups of the tannins used indeed leads to much higher complexation activity.

Another advantage is that said complexating systems may be easily obtained and lead to a removal of target molecules with a high yield. It is particularly important that the preparations described are fully compatible with the requirements for products used in food processing.

Moreover, they are sufficiently stable to resist to industrial processing, even when they chelate target molecules, but they may also be easily dissociated, when desired, for recovering separately the target molecules from one part and the complexating systems from the other part.

In addition, it is possible to choose the complexating systems i.e. the tannin, the solid support and the spacer according to both the applications and the target molecules. Said complexating systems may be used in pure form but in particular cases, it may also be appropriate to use a mixture of the complexating systems of the invention.

## Claims

1. Complexating system comprising a tannin immobilised on a solid support by means of a bifunctional spacer which is covalently bound from one hand to said solid support by a first function and from the other hand to said tannin by a second function, wherein the tannin is a naturally occurring tannin and exhibits at least six hydroxyl groups, **characterized in that** the bifunctional spacer has the following general formula II: 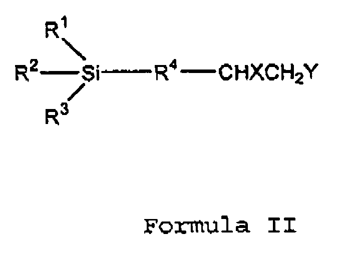 wherein :
- R¹, R² are identical or different and represent an alkyl group with 1-8 carbon atoms, preferably methyl, ethyl or isopropyl, an aryl group, an alkoxy group with 1-8 carbon atoms, preferably methoxy, ethoxy or isopropoxy, or an aryloxy group or an halogen;
- R³ is a hydrogen, an alkyl group with 1-8 carbon atoms, preferably methyl, ethyl or isopropyl, an aryl group, an alkoxy group with 1-8 carbon atoms alignment, preferably methoxy, ethoxy or isopropoxy, an aryloxy group or an halogen;
- R⁴ is an alkyl chain or an alkylcycloalkyl chain containing 1-10 carbon atoms, or an ether chain containing 2-9 carbon atoms around the oxygen;
- and CHXCH₂Y is any group that can react, preferably a vinyl group with X,Y = carbon-carbon double bond, an epoxide with X, Y = O, or X and/or Y being leaving groups such as halogenides, sulfonyl esters such as mesylates or tosylates, or isocyanates.

2. The complexating system according to claim 1, wherein the tannin is selected from the group consisting of hydrolysable tannins and condensed tannins.

3. The complexating system according to claim 2, wherein the tannin is an hydrolysable tannin comprising a central nucleus such as glucose or quinic acid esterified with aromatic acids containing a number of phenolic hydroxyl groups.

4. The complexating system according to claim 3, wherein the aromatic acids are selected from the group consisting of gallic acids, digallic acid, trigallic acid, ellagic acid, cinnamic acid, and derivatives based on these compounds, such as alkylated gallic acid or esterified gallic acid.

5. The complexating system according to claim 2, wherein the tannin is a condensed tannin selected from the group consisting of flavanoids, flavanols and stilbene derivatives.

6. The complexating system according to any one of the preceding claims, wherein the solid support is selected from the group of inorganic oxides and silicone polymers.

7. The complexating system according to claim 6, wherein the solid support is a silica, a silica prepared in the reaction mixture from its monomer, or a silicone polymer.

8. The complexating system according to claim 1, wherein the R¹R²R³-Si group of the bifunctional spacer in the formula II is a trimethoxysilyl, a triethoxysilyl group, a dimethyl-silylhydride or a dimethylsilylchloride.

9. The complexating system according to claim 1, wherein the bifunctional spacer is glycidoxypropyltrimethoxysilane or glycidoxypropyltriethoxysilane.

10. An intermediate product useful for the preparation of the complexating system of anyone of claims 1 to 9 and having the following formula IV:
SP* - Tan Formula IV
wherein SP* and Tan are the bifunctional spacer and the tannin respectively, the bifunctional spacer SP* being covalently bound by its second function to the tannin Tan, while its first function is free.

11. A method for obtaining the complexating system according to any one of claims 1 to 9, comprising the steps of forming the intermediate product according to claim 10 and then immobilising said intermediate product on a solid support or the steps of reacting an intermediate product composed of a solid support on which a bifunctional spacer as described in claim 1 is attached, with the tannin.

12. A method for removing charged target molecules contained in an aqueous medium, said method comprising the following steps:
- providing a complexating system according to any one of claims 1 to 9 or providing an intermediate product according to claim 10 and performing the method according to claim 11 so as to obtain such a complexating system;
- providing the medium comprising the target molecules;
- mixing the complexating system and the medium so as to immobilise by complexation said target molecules on the complexating system and obtaining thereby a final product;
- removing said final product from the medium by filtration or centrifugation;
- possibly recovering the complexating system and/or said target molecules for recycling purposes by dissociation of said final product.

13. The method according to claim 12, wherein the target molecules are metals.

14. The method according to claim 12, wherein the target molecules are biopolymers.

15. Use of the complexating system according to any one of claims 1 to 9, or the intermediate product according to claim 10, or the method according to any one of claims 11 to 14 for applications in food industry, in biotechnology, in pharmaceutical industry, in metallurgy, in electronic industry, in textile industry or in paper industry or in waste water treatment.

16. Use according to claim 15 for the clarification and stabilisation of beverages, the treatment of textiles, or the separation and/or purification of proteins and/or metals.

17. Use of the complexating system according to any one of claims 1 to 9 as a radical scavenger, an antibacterial or an antioxidant.

## Patentansprüche

1. Komplexierendes System, umfassend ein Tannin, das an einem festen Träger mittels eines bifunktionellen Abstandshalters immobilisiert ist, der auf der einen Seite an einen festen Träger durch eine erste Funktion und auf der anderen Seite an das Tannin durch eine zweite Funktion kovalent gebunden ist, wobei das Tannin ein natürlich vorkommendes Tannin ist und mindestens sechs Hydroxylgruppen aufweist, **dadurch gekennzeichnet, dass** der bifunktionelle Abstandshalter die folgende allgemeine Formel II aufweist: 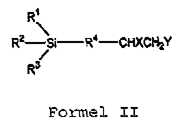 wobei:
- R¹, R² identisch oder unterschiedlich sind und eine Alkylgruppe mit 1 - 8 Kohlenstoffatomen, vorzugsweise Methyl, Ethyl oder Isopropyl, eine Arylgruppe, eine Alkoxygruppe mit 1 - 8 Kohlenstoffatomen, vorzugsweise Methoxy, Ethoxy oder Isopropoxy oder eine Aryloxygruppe oder ein Halogen darstellen;
- R³ ein Wasserstoff ist, eine Alkylgruppe mit 1 - 8 Kohlenstoffatomen, vorzugsweise Methyl, Ethyl oder Isopropyl, eine Arylgruppe, eine Alkoxygruppe mit einer Anordnung von 1 - 8 Kohlenstoffatomen, vorzugsweise Methoxy, Ethoxy oder Isopropoxy, eine Aryloxygruppe oder ein Halogen;
- R⁴ eine Alkylkette oder eine Alkylcycloalkylkette ist, die 1 - 10 Kohlenstoffatome enthält, oder eine Etherkette, die 2 - 9 Kohlenstoffatome um das Sauerstoffatom herum enthält;
- und CHXCH₂Y irgendeine Gruppe ist, die reagieren kann, vorzugsweise eine Vinylgruppe mit X, Y = Kohlenstoff-Kohlenstoff Doppelbindung, ein Epoxid mit X, Y = O, oder X und/oder Y sind Fluchtgruppen wie Halogenide, Sulfonylester, wie Mesylate oder Tosylate, oder Isocyanate.

2. Komplexierendes System nach Anspruch 1, wobei das Tannin ausgewählt ist aus der Gruppe bestehend aus hydrolysierbaren Tanninen und kondensierten Tanninen.

3. Komplexierendes System nach Anspruch 2, wobei das Tannin ein hydrolysierbares Tannin ist, umfassend einen zentralen Kern wie Glucose oder Chinasäure, der mit aromatischen Säuren, die eine Anzahl von phenolischen Hydroxylgruppen enthalten, verestert ist.

4. Komplexierendes System nach Anspruch 3, wobei die aromatischen Säuren ausgewählt sind aus der Gruppe bestehend aus Gallussäuren, Digallussäure, Trigallussäure, Ellagsäure, Zimtsäure und Derivaten, die auf diesen Verbindungen basieren, wie alkylierte Gallussäure oder veresterte Gallussäure.

5. Komplexierendes System nach Anspruch 2, wobei das Tannin ein kondensiertes Tannin ist, ausgewählt aus der Gruppe bestehend aus Flavonoiden, Flavonolen und Stilbenderivaten.

6. Komplexierendes System nach einem der vorhergehenden Ansprüche, wobei der feste Träger ausgewählt ist aus der Gruppe bestehend aus anorganischen Oxiden und Silikonpolymeren.

7. Komplexierendes System nach Anspruch 6, wobei der feste Träger ein Siliciumdioxid, ein Siliciumdioxid, das in dem Reaktionsgemisch aus seinem Monomer hergestellt wurde oder ein Silikonpolymer ist.

8. Komplexierendes System nach Anspruch 1, wobei die R¹R²R³-Si-Gruppe von dem bifunktionellen Abstandshalter in der Formel II ein Trimethoxysilyl, eine Triethoxysilylgruppe, ein Dimethylsilylhydrid oder ein Dimethylsilylchlorid ist.

9. Komplexierendes System nach Anspruch 1, wobei der bifunktionelle Abstandshalter Glycidoxy-propyltrimethoxysilan oder Glycidoxypropyltriethoxysilan ist.

10. Zwischenprodukt, das für die Darstellung des komplexierenden Systems nach einem der Ansprüche 1 bis 9 verwendbar ist und die folgende Formel IV aufweist:
SP* - Tan Formel IV
wobei SP* und Tan der bifunktionelle Abstandshalter, beziehungsweise das Tannin sind, der bifunktionelle Abstandshalter SP* durch seine zweite Funktion kovalent an das Tannin Tan gebunden ist, während seine erste Funktion frei ist.

11. Verfahren zum Erhalten des komplexierenden Systems nach einem der Ansprüche 1 bis 9, umfassend die Schritte der Bildung des Zwischenproduktes nach Anspruch 10 und anschließendes Immobilisieren des Zwischenproduktes an einem festen Träger oder die Schritte der Reaktion eines Zwischenproduktes, bestehend aus einem festen Träger, an dem ein bifunktioneller Abstandshalter, wie in Anspruch 1 beschrieben angebracht ist, mit dem Tannin.

12. Verfahren zum Entfernen geladener Zielmoleküle, die in einem wässrigen Medium enthalten sind, wobei das Verfahren die folgenden Schritte umfasst:
- Bereitstellen eines komplexierenden Systems nach einem der Ansprüche 1 bis 9 oder Bereitstellen eines Zwischenproduktes nach Anspruch 10 und Ausführen des Verfahrens nach Anspruch 11, um so solch ein komplexierendes System zu erhalten;
- Bereitstellen des Mediums, das die Zielmoleküle umfasst;
- Mischen des komplexierenden Systems und des Mediums, um so die Zielmoleküle an dem komplexierenden System durch Komplexierung zu immobilisieren und **dadurch** ein Endprodukt zu erhalten;
- Entfernen des Endproduktes aus dem Medium durch Filtration oder Zentrifugation;
- möglicherweise Rückgewinnen des komplexierenden Systems und/oder der Zielmoleküle zum Zweck der Regenerierung durch Dissoziation von dem Endprodukt.

13. Verfahren nach Anspruch 12, wobei die Zielmoleküle Metalle sind.

14. Verfahren nach Anspruch 12, wobei die Zielmoleküle Biopolymere sind.

15. Verwendung des komplexierenden Systems nach einem der Ansprüche 1 bis 9 oder des Zwischenproduktes nach Anspruch 10 oder des Verfahrens nach einem der Ansprüche 11 bis 14 für Anwendungen in der Lebensmittelindustrie, in der Biotechnologie, in der Pharmaindustrie, in der Metallurgie, in der Elektronikindustrie, in der Textilindustrie oder in der Papierindustrie oder in der Abwasseraufbereitung.

16. Verwendung nach Anspruch 15 für die Klärung und Stabilisierung von Getränken, die Behandlung von Textilien oder die Trennung und/oder die Reinigung von Proteinen und/oder Metallen.

17. Verwendung des komplexierenden Systems nach einem der Ansprüche 1 bis 9 als ein Radikalfänger, ein Antibakterium oder ein Antioxidationsmittel.

## Revendications

1. Système complexant comprenant un tannin immobilisé sur un support solide au moyen d'un espaceur bifonctionnel qui est lié de manière covalente d'une part audit support solide par une première fonction et d'autre part audit tannin par une deuxième fonction, dans lequel le tannin est un tannin présent à l'état naturel et présente au moins six groupes hydroxyles, **caractérisé en ce que** l'espaceur bifonctionnel a la formule générale II suivante : 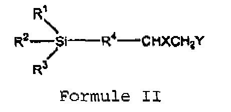 dans laquelle :
- R¹, R² sont identiques ou différents et représentent un groupe alkyle ayant de 1 à 8 atomes de carbone, de préférence le méthyle, l'éthyle ou l'isopropyle, un groupe aryle, un groupe alcoxy ayant de 1 à 8 atomes de carbone, de préférence méthoxy, éthoxy ou isopropoxy, ou un groupe aryloxy ou un halogène ;
- R³ est un hydrogène, un groupe alkyle ayant de 1 à 8 atomes de carbone, de préférence le méthyle, l'éthyle ou l'isopropyle, un groupe aryle, un groupe alcoxy ayant un alignement de 1 à 8 atomes de carbone, de préférence méthoxy, éthoxy ou isopropoxy, un groupe aryloxy ou un halogène ;
- R⁴ est une chaîne alkyle ou une chaîne alkylcycloalkyle contenant de 1 à 10 atomes de carbone, ou une chaîne éther contenant de 2 à 9 atomes de carbone autour de l'oxygène ;
- et CHXCH₂Y est un groupe réactif quelconque, de préférence un groupe vinyle avec X,Y = double liaison carbone-carbone, un époxyde avec X, Y = O, ou bien X et/ou Y sont des groupes partants tels que des halogénures, des esters de sulfonyle tels que des mésylates ou des tosylates, ou bien des isocyanates.

2. Système complexant selon la revendication 1, dans lequel le tannin est choisi dans le groupe constitué par les tannins hydrolysables et les tannins condensés.

3. Système complexant selon la revendication 2, dans lequel le tannin est un tannin hydrolysable comprenant un noyau central tel que le glucose ou l'acide quinique estérifié avec des acides aromatiques contenant un certain nombre de groupes hydroxyles phénoliques.

4. Système complexant selon la revendication 3, dans lequel les acides aromatiques sont choisis dans le groupe constitué par les acides galliques, l'acide digallique, l'acide trigallique, l'acide ellagique, l'acide cinnamique et les dérivés à base de ces composés, par exemple un acide gallique alkylé ou un acide gallique estérifié.

5. Système complexant selon la revendication 2, dans lequel le tannin est un tannin condensé choisi dans le groupe constitué par les flavanoïdes, les flavanols et les dérivés de stilbène.

6. Système complexant selon l'une quelconque des revendications précédentes, dans lequel le support solide est choisi dans le groupe des oxydes inorganiques et des polymères de silicone.

7. Système complexant selon la revendication 6, dans lequel le support solide est une silice, une silice préparée dans le mélange réactionnel à partir de son monomère, ou un polymère de silicone.

8. Système complexant selon la revendication 1, dans lequel le groupe R¹R²R³-Si de l'espaceur bifonctionnel dans la formule II est un groupe triméthoxysilyle, triéthoxysilyle, un hydrure de diméthylsilyle ou un chlorure de diméthylsilyle.

9. Système complexant selon la revendication 1, dans lequel l'espaceur bifonctionnel est le glycidoxypropyltriméthoxysilane ou le glycidoxypropyltriéthoxysilane.

10. Produit intermédiaire utile pour la préparation du système complexant selon l'une quelconque des revendications 1 à 9 et ayant la formule IV suivante :
SP* - Tan Formule IV
dans laquelle SP* et Tan sont l'espaceur bifonctionnel et le tannin, respectivement, l'espaceur bifonctionnel SP* étant lié de manière covalente par sa deuxième fonction au tannin Tan tandis que sa première fonction est libre.

11. Procédé d'obtention du système complexant selon l'une quelconque des revendications 1 à 9, comprenant les étapes consistant à former le produit intermédiaire selon la revendication 10 et ensuite à immobiliser ledit produit intermédiaire sur un support solide, ou comprenant les étapes consistant à faire réagir avec le tannin un produit intermédiaire composé d'un support solide sur lequel un espaceur bifonctionnel est rattaché ainsi que décrit dans la revendication 1.

12. Procédé d'enlèvement de molécules cibles chargées contenues dans un milieu aqueux, ledit procédé comprenant les étapes suivantes consistant à :
- fournir un système complexant selon l'une quelconque des revendications 1 à 9 ou fournir un produit intermédiaire selon la revendication 10 et effectuer le procédé selon la revendication 11 de façon à obtenir un tel système complexant ;
- fournir le milieu comprenant les molécules cibles ;
- mélanger le système complexant et le milieu de façon à immobiliser par complexation lesdites molécules cibles sur le système complexant et obtenir ainsi un produit final ;
- enlever ledit produit final du milieu par filtration ou centrifugation ;
- récupérer le cas échéant le système complexant et/ou lesdites molécules cibles à des fins de recyclage par dissociation dudit produit final.

13. Procédé selon la revendication 12, dans lequel les molécules cibles sont des métaux.

14. Procédé selon la revendication 12, dans lequel les molécules cibles sont des biopolymères.

15. Utilisation du système complexant selon l'une quelconque des revendications 1 à 9 ou du produit intermédiaire selon la revendication 10 ou du procédé selon l'une quelconque des revendications 11 à 14 pour des applications dans l'industrie alimentaire, dans la biotechnologie, dans l'industrie pharmaceutique, dans la métallurgie, dans l'industrie électronique, dans l'industrie du textile ou dans l'industrie du papier ou dans le traitement des eaux usées.

16. Utilisation selon la revendication 15 pour la clarification et la stabilisation de boissons, le traitement de textiles ou la séparation et/ou la purification de protéines et/ou de métaux.

17. Utilisation du système complexant selon l'une quelconque des revendications 1 à 9 comme piégeur de radicaux, comme agent antibactérien ou comme antioxydant.
